# EUROPÄISCHE PATENTANMELDUNG

(11) **EP 0 974 490 A1**
(43) Veröffentlichungstag der Anmeldung: **26.01.2000**
(21) Anmeldenummer: 99111105.5
(22) Anmeldetag: 08.06.1999
(51) Int. Cl.: B60R 16/00, H01H 25/06

(54) **Lenkstockschalter**

(30) Priorität: 22.07.1998 DE 19832869
(71) Anmelder: Dr.Ing. h.c.F. Porsche Aktiengesellschaft, 70435 Stuttgart (DE)
(72) Erfinder: Schäfer, Peter, 71297 Mönsheim (DE)

(57) **Zusammenfassung**

Die Erfindung betrifft einen Lenkstockschalter, der aus einer Traghülse und einem auf der Traghülse gehaltenen Kopf besteht. Zumindest der Kopf ist auf der Traghülse drehbar gehalten und verrastet in verschiedenen radialen Schaltstellungen. In jeder radialen Schaltstellung sind durch Verschwenken weitere Schaltpositionen auslösbar. Um einen Lenkstockschalter zu schaffen, der eine verbesserte Bedienung ermöglicht, insbesondere wenn den verschiedenen radialen Schaltstellungen unterschiedliche zu bedienende Geräte zugeordnet sind, wird vorgeschlagen, daß zumindest der Kopf fremdkraftbetätigt in eine vorgegebene radiale Schaltstellung verbringbar ist.

## Beschreibung

Die Erfindung betrifft einen Lenkstockschalter nach dem Oberbegriff des Patentanspruches 1.

Aus der DE-OS 20 49 849 ist bereits ein Lenkstockschalter bekannt geworden, dessen Kopf drehbar gelagert ist, wobei der Kopf mehrere radiale Schaltstellungen einnehmen kann. Zusätzlich ist stirnseitig des Kopfes ein axial beweglicher Schaltknopf zum Auslösen weiterer Schaltfunktionen vorgesehen.

Gegenüber diesem Stand der Technik ist es Aufgabe der Erfindung, einen Lenkstockschalter zu schaffen, der eine verbesserte Bedienung ermöglicht, insbesondere wenn den verschiedenen radialen Schaltstellungen unterschiedliche zu bedienende Geräte zugeordnet sind.

Diese Aufgabe wird erfindungsgemäß mit den Merkmalen des Patentanspruches 1 gelöst. Es wird vorgeschlagen, daß zumindest der Kopf fremdkraftbetätigt in eine vorgegebene radiale Schaltstellung verbringbar ist. In vorteilhafter Weise kann damit der Lenkstockschalter durch ein externes Signal, nämlich die Fremdkraft, unabhängig von einer zuvor erfolgten manuellen Betätigung durch den Fahrer in eine vorgegebene radiale Schaltstellung gebracht werden.

Vorteilhafte Weiterbildungen der Erfindung sind in den Unteransprüchen dargestellt.

So wird in Weiterbildung der Erfindung vorgeschlagen, eine Rastierung, die den Kopf in den verschiedenen radialen Schaltstellungen hält, fremdkraftbetätigt aufhebbar zu gestalten und außerdem den Kopf zentriert auf eine vorgegebene radiale Schaltstellung zu halten. Somit kehrt der Kopf des Lenkstockschalters bei Aufhebung der Rastierung durch eine Fremdkraft, beispielsweise einen Elektromagneten, in die vorgegebene radiale Schaltstellung zurück.

Fernerhin wird vorgeschlagen, daß jeder radialen Schaltstellung des Kopfes ein Gerät zugeordnet ist, das in dieser radialen Schaltstellung mit den weiteren Schaltpositionen des Lenkstockschalters bedienbar ist. Mit Hilfe des Lenkstockschalters kann somit eine Vielzahl von Geräten bedient werden; durch die Wahl der radialen Schaltstellung erfolgt die Auswahl des Gerätes und durch das Verschwenken des Lenkstockschalters kann dieses Gerät dann bedient werden. Im Zusammenhang mit der fremdkraftbetätigten Rückstellung des Lenkstockschalters ist nach einer fremdkraftbetätigten Rückstellung stets das der vorgegebenen radialen Schaltstellung zugeordnete Gerät bedienbar.

Weiterhin wird vorgeschlagen, daß das Gerät, das der vorgegebenen radialen Schaltstellung zugeordnet ist, die Fremdkraft steuert. In vorteilhafter Weise kann damit das der vorgegebenen radialen Schaltstellung zugeordnete Gerät den Lenkstockschalter in eine Position bringen, in der dieses Gerät bedienbar ist. Dies ist beispielsweise dann von besonderem Vorteil, wenn es sich bei dem Gerät um ein Telefon handelt. Ein solches Telefon kann nun bei einem ankommenden Anruf den Lenkstockschalter in eine radiale Schaltstellung bringen, in der eine Bedienung des Telefones und damit eine Annahme des ankommenden Anrufes möglich ist, unabhängig von der radialen Schaltstellung, in die der Lenkstockschalter zuvor durch den Fahrer manuell gebracht worden ist.

Die Erfindung ist nachstehend anhand des in den Figuren dargestellten Ausführungsbeispieles näher erläutert. Es zeigen:
- Fig. 1: Eine Ansicht eines Lenkstockschalters,
- Fig. 2: eine Darstellung vorgegebener radialer Schaltstellungen des Lenkstockschalters nach einer ersten Anwendung,
- Fig. 3: einen Schnitt durch eine Rastierung des Lenkstockschalters,
- Fig. 4: eine seitliche Ansicht der Rastierung,
- Fig. 5: ein Blockschaltbild des Lenkstockschalters und weiterer, mit dem Lenkstockschalter verbundener Geräte,
- Fig. 6: ein Bedienschema für einen Bordcomputer,
- Fig. 7: ein Bedienschema für ein Radio und ein Telefon,
- Fig. 8: ein Bedienschema für ein Infosystem,
- Fig. 9: eine Darstellung vorgegebener radialer Schaltstellungen des Lenkstockschalters nach einer zweiten Anwendung in Verbindung mit einem abstandsgeregelten Tempostat-System und
- Fig. 10: ein Bedienschema hierzu.

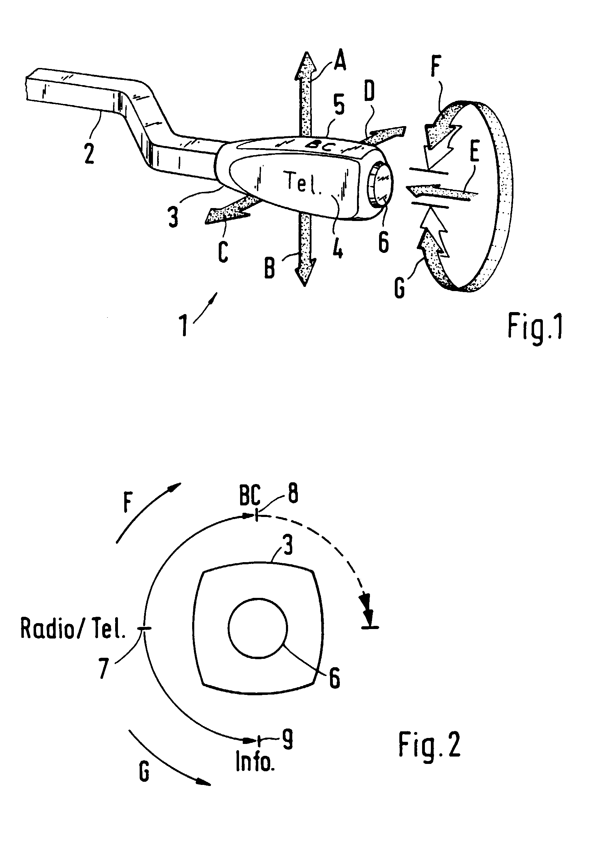

Fig. 1 zeigt einen Lenkstockschalter 1, bestehend aus einer Traghülse 2 und einem Kopf 3. Im vorliegenden Fall ist der Kopf 3 mit der Traghülse 2 um eine Längsachse L der Traghülse 2 schwenkbar verbunden, so daß Bewegungen F und G möglich sind. Die Traghülse 2 ist in nicht näher dargestellter Weise schwenkbar gehalten und erlaubt Bewegungen A bis D. Die Schwenkbewegungen A und B entsprechen einer Auf- und Abbewegung des Lenkstockschalters 1, die Bewegungen C und D einer Vor- und einer Rückbewegung, jeweils bezogen auf einen nicht dargestellten Fahrer. In einer Bewegungsrichtung E wird ein stirnseits des Kopfes 3 angeordneter Knopf 6 betätigt.

Auf dem Kopf 3 sind Beschriftungen 4, 5 angeordnet, wobei die jeweils dem Fahrer zugeordnete Beschriftung - im dargestellten Beispiel ist dies die Beschriftung 4 - dem Fahrer anzeigt, welche radiale Schaltstellung der Kopf 3 gerade einnimmt. Zur Anbringung der Beschriftungen 4,5 können diese auf nicht näher gezeigten Kappen angeordnet sein, die in den Kopf 3 eingeklipst sind. Hiermit ist es möglich, die Beschriftungen der Ausstattung eines mit dem Lenkstockschalter 1 versehenen Fahrzeuges einfach anzupassen.

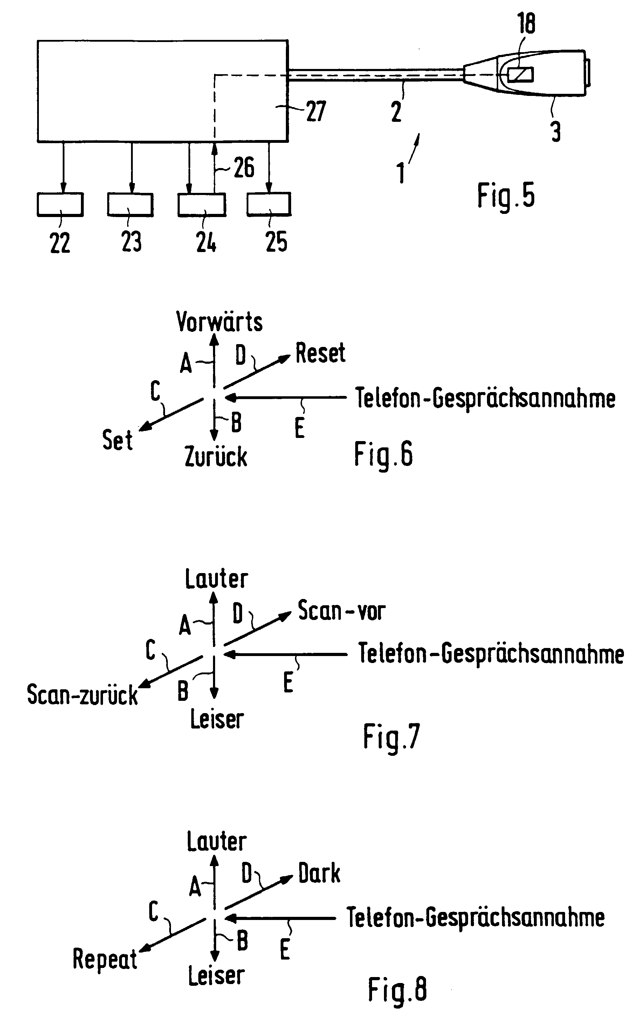

Wie in Fig. 2 näher dargestellt, ist in den verschiedenen Schaltstellungen des Kopfes 3 jeweils die Bedienung eines Gerätes zugeordnet. So sind in der Schaltstellung 7 ein Telefon 21 und ein Radio 25 (vgl. Fig. 5), in der Schaltstellung 8 ein Bordcomputer 23 und in der Schaltstellung 9 ein Infosystem 22 bedienbar, wobei die Bedienung jeweils durch die Bewegungen A bis E erfolgt. Der Kopf 3 verrastet in jeder der Schaltstellungen 7 bis 9. Ergänzend ist es selbtverständlich möglich, auch die in Fig. 2 gestrichelt dargestellte Schaltstellung einem weiteren, nicht dargestellten Gerät zuzuordnen.

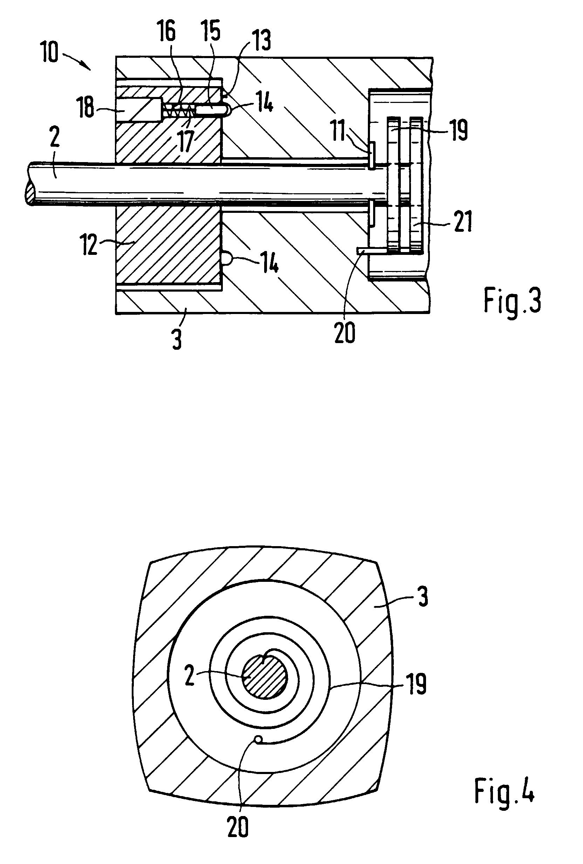

In Fig. 3 und 4 ist eine zur Rastierung des Kopfes 3 verwendete Rasteinrichtung 10 näher dargestellt. Der Kopf 3 ist auf der Traghülse 2 drehbar gelagert und mit einer Sicherungsscheibe 11 in axialer Richtung gesichert. Das zweite axiale Lager für den Kopf 3 ist durch einen Block 12 gebildet, der auf der Traghülse 2 fest angeordnet ist. In einer Berührungsebene 13 zwischen dem Block 12 und dem Kopf 3 sind in den Kopf 3 Vertiefungen 14 eingearbeitet, die den Schaltstellungen 7 bis 9 entsprechen. Korrespondierend zu den Vertiefungen 14 ist im Block 12 ein Raststift 15 angeordnet, der durch eine Feder 16 belastet ist. Gleichzeitig ist der Raststift 15 mit einem Zuganker 17 eines Elektromagneten 18 verbunden. Wird der Magnet 18 bestromt, so wird mittels des Zugankers 17 der Raststift 15 entgegen die Kraft der Feder 16 aus der Vertiefung 14 herausgezogen.

Eine Drehfeder 19, die hier hinter der Sicherungsscheibe 11 angeordnet ist, ist auf der Traghülse 2 drehfest gelagert und greift durch einen Stift 20 am Kopf 3 an. Eine zweite Drehfeder 21 ist ebenfalls auf der Traghülse 2 drehfest gelagert und greift gleichfalls am Stift 20 an. Bei gelöster Rastiereinrichtung 10, d.h. bei frei drehbarem Kopf 3, nehmen die Drehfedern 19, 21 eine Position ein, in der sich die nacheinander entgegengesetzt gerichteten Federkräfte aufheben. Die Federn 19, 21 sind dabei so abgestimmt, daß diese Position der Schaltstellung 7 des Kopfes 3 entspricht.

Mit anderen Worten: Die Bestromung des Elektromagneten 18 hat zur Folge, daß der Kopf 3 durch die Kraft der Drehfeder 19, 21 in eine vorgegebene Position, hier die Schaltstellung 7, bewegt wird. Hierbei ist es selbstverständlich möglich, anstelle der Drehfedern 19, 21 andere Mittel zur Rückstellung des Kopfes 3 in die vorgegebene Schaltposition 7 zu verwenden; beispielsweise kann der Kopf 3 auch elektromotorisch bewegt werden.

Fig. 5 zeigt in Form eines Blockschaltbildes das Zusammenwirken des Lenkstockschalters 1 mit den zugeordneten Geräten Infosystem 22, Bordcomputer 23, Telefon 24 und Radio 25.

Je nach radialer Schaltstellung 6 bis 9 des Lenkstockschalters 1 werden in einem Schalterblock 27 des Lenkstockschalters 1 aus den Bewegungen Signale erzeugt und an eines der Geräte 19 bis 22 weitergegeben, so daß das jeweilige Gerät durch die radiale Schaltstellung 6 bis 9 ausgewählt und durch die Bewegung des Lenkstockschalters 1 bedienbar ist. Das Telefon 24 ist über eine gesonderte Leitung 26 mit dem Hubmagneten 18 verbunden. Ein ankommender Anruf wird vom Telefon 24 siganlisiert, und wenn der Fahrer durch Drücken des Knopfes 6 das Gespräch annimmt betätigt das Telefon 24 über die Leitung 26 den Hubmagneten 18. Daraufhin wird die Wirkung der Rasteinrichtung 10 aufgehoben und die Drehfedern 19, 21 drehen den Lenkstockschalter 1 in die radiale Schaltstellung 7, die dem Telefon 24 zugeordnet ist. Somit kann der Fahrer bei einem ankommenden Anruf durch Drücken des Knopfes 6 unmittelbar in die dem Telefon 24 zugeordnete Schaltstellung gelangen, ohne zuvor den Kopf 3 in die radiale Schaltstellung 7 drehen zu müssen bzw. ohne prüfen zu müssen, ob sich der Kopf 3 bereits in der radialen Schaltstellung 7 befindet. Für die dargestellte Ausgestaltung des Lenkstockschalters 1 wäre es grundsätzlich auch ausreichend, die Wirkung der Rasteinrichtung 10 mechanisch durch Koppeln des Knopfes 6 mit der Rasteinrichtung 10 aufzuheben. Hiermit geht jedoch die Möglichkeit verloren, die Wirkung der Rasteinrichung 10 durch das Telefon 24 und/oder das Radio 25 zu einem beliebigen Zeitpunkt aufzuheben.

Die Bedienung der zugeordneten Geräte 22 bis 25 mit Hilfe des Lenkstockschalters 1 ist in den Fig. 6 bis 8 näher dargestellt.

Fig. 6 zeigt die Bedienung des Bordcomputers 23 in der Schaltstellung 8. Durch Bewegungen in den Richtungen A und B werden unterschiedliche Anzeigen (Außentemperatur, Restreichweite, mittlere Geschwindigkeit etc.) des Bordcomputers 23 ausgewählt. Die Bewegungsrichtung A wählt hierbei die nächste Anzeige, die Bewegungsrichtung B die vorhergehende Anzeige aus. Soweit dies für den dargestellten Anzeigewert vorgesehen ist, kann durch die Bewegungsrichtung D ein Zurücksetzen (Reset) auf den Wert Null erfolgen oder die Bewegungsrichtung C ein Wert voreingestellt werden.

Durch Drücken des Knopfes 6 (Bewegungsrichtung E) kann jederzeit ein ankommendes Telefongespräch angenommen und der Kopf 3 in die radiale Schaltstellung 7 gedreht werden.

Die Bedienung des Telefones 24 und des Radios 25 in der Schaltstellung 7 ist in Fig. 7 dargestellt. Die Bewegungsrichtungen A bis D sind zunächst zur Bedienung des Radios vorgesehen: In Bewegungsrichtung A wird die Lautstärke erhöht, in Bewegungsrichtung B wird die Lautstärke vermindert. Die Bewegungsrichtung C löst einen Sendersuchlauf in Richtung kleinerer Frequenzen aus, während die Bewegungsrichtung D einen Sendersuchlauf in Richtung höherer Frequenzen auslöst. Bei aktiviertem Telefon hingegen wird das Radio 25 stummgeschaltet; die Bewegungsrichtungen A und B sind nun zur Lautstärkeregelung des Telefones 24 bestimmt, wobei die Bedienung analog zur Lautstärkeregelung beim Radio 25 erfolgt.

Ein ankommendes Telefongespräch kann durch Drücken des Knopfes 6 angenommen werden. Darüber hinaus kann in dieser Schaltstellung 7 auch ein abgehendes Gespräch durch Drücken des Knopfes 6 ausgelöst werden. In diesem Falle muß zuvor über eine gesonderte, nicht dargestellte Tastatur eine Telefonnummer eingegeben oder aus einem ebenfalls nicht dargestellten Speicher gewählt werden. Diese Nummer wird dann auf das Drücken des Knopfes 6 hin gewählt und die Verbindung wird hergestellt.

Wird das Telefon 24 über den Knopf 6 aktiviert (Gesprächsannahme, abgehendes Gespräch), so wird mit der Aktivierung des Radios 25 stummgeschaltet. Solange das Telefon 24 aktiviert ist, wird durch die Bewegungsrichtungen A und B die Lautstärke des Telefones 24 eingestellt. Ist hingegen das Radio 25 aktiviert, so dienen die Bewegungsrichtungen A und B zur Einstellung der Radio-Lautstärke. Die Einstellung der Lautstärke wird für das Radio 25 und das Telefon 24 getrennt gespeichert.

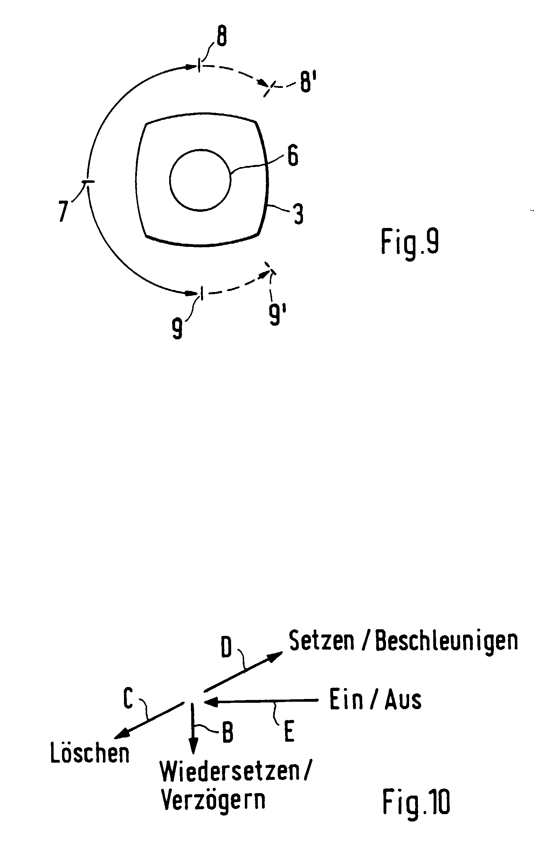

Fig. 8 zeigt schließlich die Bedienung des Infosystemes 22. Durch die Bewegungsrichtung A und B kann die Lautstärke der Sprachausgabe erhöht bzw. vermindert werden. Mit der Bewegungsrichtung C wird eine Wiederholung der letzten Durchsage ausgelöst. In Bewegungsrichtung D wird eine nicht näher dargestellte Anzeige des Infosystemes abgedunkelt, um insbesondere bei Nachtfahrten die Blendung zu vermindern.

Auch in dieser Schaltstellung 9 kann durch Drücken des Knopfes 6 ein ankommendes Telefongespräch angenommen und der Kopf 3 in die radiale Schaltstellung 7 gedreht werden.

In Fig. 9 und 10 ist als weiteres Anwendungsbeispiel des Lenkstockschalters 1 eine Verwendung in Verbindung mit einem abstandsgeregelten Tempostat-System dargestellt. Bei einem abstandsgeregelten Tempostat-System handelt es sich grundsätzlich um eine Einrichtung zur automatischen Einregelung des Fahrzeuges auf eine vom Fahrer vorgegebene Geschwindigkeit. Abstandsgeregelt bedeutet in diesem Zusammenhang, daß zusätzlich der Abstand zu einem in derselben Fahrspur vorausfahrenden Fahrzeug berücksichtigt wird. Hierzu wird der Abstand zu dem vorausfahrenden Fahrzeug bestimmt. Unterschreitet dieser so ermittelte Abstand einen vorgegebenen, vorzugsweise geschwindigkeitsabhängigen Wert, so tritt an die Stelle der Geschwindigkeits-Regelung eine Abstands-Regelung, so daß das eigene Fahrzeug dem vorausfahrenden Fahrzeug in dem durch das System vorgegebenen Abstand folgt. An die Stelle der Abstandsregelung tritt wieder die Geschwindigkeits-Regelung, wenn die zuvor eingestellte Geschwindigkeit erreicht wird. Ein zur Bedienung eines derartigen abstandsgeregelten Tempostat-Systemes verwendeter Lenkstockschalter 1 kann zusätzlich zu einem anderen Lenkstockschalter 1 vorgesehen sein, mit dem wie im ersten Ausführungsbeispiel beschrieben, verschiedene Geräte des Fahrzeuges bedienbar sind.

Fig. 9 zeigt die Schaltstellungen 7 bis 9 sowie 8' und 9' für einen derart verwendeten Lenkstockschalter 1. In der Schaltstellung 7 ist das mit dem Lenkstockhebel 1 verbundene Tempostat-System in seinem Grundzustand, d.h. es wird ein Ausgangs-Abstand zum vorausfahrenden Fahrzeug eingestellt. Dieser Ausgangs-Abstand entspricht vorzugsweise dem gesetzlich vorgeschriebenen Mindest-Abstand. Durch Verdrehen des Kopfes in die Schaltstellung 8 kann der Fahrer einen gegenüber dem Ausgangs-Abstand verminderten Nah-Abstand einstellen. Durch die Schaltstellung 9 kann er demgegenüber einen Fern-Abstand einstellen, der gegenüber dem Ausgangs-Abstand merklich vergrößert ist.

Aus den Schaltstellung 8 und 9 heraus sind weitere Schaltstellungen 8' und 9' anwählbar, in denen der Kopf 3 jedoch nicht verrastet. D.h. zum Anwählen der Schaltpositionen 8' und 9' muß der Kopf 3 vom Fahrer festgehalten werden; läßt der Fahrer den Kopf 3 los, so kehrt dieser in die Schaltstellung 8 bzw. 9 zurück. Es ist auch möglich, nur die Schaltstellungen 8' und 9' vorzusehen, in denen der Kopf 3 nicht verrastet; der Kopf 3 kehrt dann nach Betätigung in die Schaltstellung 7 zurück.

Mit der Schaltstellung 8' ist eine stufenlose Verminderung des Abstandes zum vorausfahrenden Fahrzeug möglich, d.h. so lange der Kopf 3 in der Schaltstellung 8' gehalten ist, wird der Abstand zum vorausfahrenden Fahrzeug kontinuierlich mit geringer Änderungsgeschwindigkeit vermindert. Durch das Loslassen des Kopfes 3 und dessen anschließende Rückkehr in die Schaltstellung 8 wird der auf diese Weise verminderte Abstand gehalten. Ausgehend von der Schaltstellung 8 ist eine weitere Verminderung des Abstandes durch erneutes Anwählen in der Schaltstellung 8' möglich. In analoger Weise kann in der Schaltstellung 9' der Abstand zum vorausfahrenden Fahrzeug stufenlos vergrößert werden.

Alternativ erfolgt die Verminderung des Abstandes zum vorausfahrenden Fahrzeug in der Schaltstellung 8' in Stufen, z.B. im Bereich von 10% bis 30% des Abstandes. Mit jeder Anwahl der Schaltstellung 8' wird der Abstand zum vorausfahrenden Fahrzeug um eine Stufe vermindert. Auch nachdem der Kopf 3 in die Schaltstellung 8 zurückgekehrt ist, wird der auf diese Weise verminderte Abstand gehalten. Durch erneute Anwahl der Schaltstellung 8' ist eine weitere Verminderung des Abstandes um eine weitere Stufe möglich. In analoger Weise kann in der Schaltstellung 9' der Abstand zum vorausfahrenden Fahrzeug in Stufen vergrößert werden.

Wird die Schaltstellung 8' aus der Schaltstellung 7 heraus angewählt, ohne daß der Kopf in der Schaltstellung 8 verweilt, so beginnt die Verminderung des Abstandes ausgehend vom Ausgangs-Abstand und nicht ausgehend vom Nah-Abstand.

Der durch Anwahl der Schaltstellung 8' neu eingestellte, verminderte Abstand wird als neuer Nah-Abstand für die Schaltstellung 8 gespeichert. Analoges gilt für den durch Anwahl der Schaltstellung 9' neu eingestellte, vergrößerten Abstand.

Die Schaltpositionen B bis D dienen in an sich bekannter Weise zur Einstellung der Soll-Geschwindigkeit. In der Schaltposition D wird die aktuelle Geschwindigkeit als Soll-Geschwindigkeit als Soll-Geschwindigkeit gesetzt und damit das Tempostat-System aktiviert. Bei bereits aktiviertem Tempostat-System wird das Fahrzeug langsam beschleunigt, so lange der Lenkstockschalter 1 in der Schaltposition D gehalten ist. Alternativ wird bei jeder Anwahl der Schaltposition D die Soll-Geschwindigkeit um eine vorgegebene Stufe im Bereich von 10% bis 30% erhöht. Die Schaltposition C dient zum Deaktivieren (Löschen) des Tempostat-Systemes; die aktuell eingestellte Soll-Geschwindigkeit wird zwischengespeichert. Durch Anwählen der Schaltposition B kann nach einem Deaktivieren des Tempostat-Systemes das Tempostat-System wieder aktiviert werden, wobei als Soll-Geschwindigkeit die zuvor gespeicherte Soll-Geschwindigkeit verwendet wird. Ist das Tempostat-System bereits aktiviert, so kann das Fahrzeug durch Anwählen der Schaltposition B so lange verzögert werden, wie die Schaltposition B gewählt ist. Alternativ wird bei jeder Anwahl der Schaltposition B die Soll-Geschwindigkeit um eine vorgegebene Stufe im Bereich von 10% bis 30% vermindert.

Mit Hilfe des Knopfes 6 - entsprechend der Schaltposition E - kann das Tempostat-System in seine Bereitschaftsstellung gebracht werden. Durch Einschalten der Bereitschaftsstellung (einmaliges Drücken des Knopfes 6) wird das Tempostat-System noch nicht aktiviert; hierzu ist vielmehr zusätzlich das Anwählen der Schaltposition D notwendig. Unabhängig vom Zustand des Tempostat-Systemes wird durch nochmaliges Drücken des Knopfes 6 das Tempostat-System vollständig abgeschaltet. Gleichzeitig wird der Magnet 18 bestromt, so daß der Kopf 3 in seine Ruhestellung, nämlich die Schaltstellung 7 zurückkehrt.

Beim Ausschalten der Bereitsschaftsstellung durch Drücken des Knopfes 6 werden die zuvor gespeicherte Soll-Geschwindigkeit sowie alle zuvor neu eingestellte und gespeicherte Abstände gelöscht. Durch diese Maßnahme ist sichergestellt, daß beim Abschalten des Tempostat-Systemes fest eingespeicherte Ausgangswerte wieder hergestellt werden, so daß der Fahrer beim erneuten Einschalten des Tempostat-Systemes über den Knopf 6 nicht von zuvor willkürlich gewählten Voreinstellungen überrascht wird. Alternativ ist es möglich, die Löschung erst dann vorzunehmen, wenn das Fahrzeug außer Betrieb genommen wird; dann bleiben die gespeicherten Werte bis zur nächsten Fahrtunterbrechung erhalten.

## Patentansprüche

1. Lenkstockschalter bestehend aus einer Traghülse ((2) und einem auf der Traghülse gehaltenen Kopf (3), wobei zumindest der Kopf auf der Traghülse drehbar gehalten ist, in verschiedenen radialen Schaltstellungen (7 bis 9) verrastet und in jeder radialen Schaltstellung durch Verschwenken weitere Schaltpositionen (A bis E) auslösbar sind, **dadurch gekennzeichnet**, daß zumindest der Kopf (3) fremdkraftbetätigt in eine vorgegebene radiale Schaltstellung (7) verbringbar ist.

2. Lenkstockschalter nach Anspruch 1, **dadurch gekennzeichnet**, daß die Rastierung des Kopfes (3) fremdkraftbetätigt aufhebbar ist und der Kopf zentriert auf die vorgegebene radiale Schaltstellung gehalten ist.

3. Lenkstockschalter nach Anspruch 1 oder 2, **dadurch gekennzeichnet**, daß jeder radialen Schaltstellung (7 bis 9) des Kopfes eine Bedienung eines Gerätes (22 bis 25) zugeordnet ist, und daß das zugeordnete Gerät in dieser radialen Schaltstellung mit den weitere Schaltpositionen (A bis E) bedienbar ist.

4. Lenkstockschalter nach Anspruch 3, **dadurch gekennzeichnet**, daß die Rastierung durch das Gerät, das der vorgegebenen radialen Schaltstellung zugeordnet ist, aufhebbar ist.

5. Lenkstockschalter nach Anspruch 4, **dadurch gekennzeichnet**, daß das Gerät ein Telefon (24) ist, das die Rastierung bei einem ankommenden Anruf aufhebt.
